# EUROPÄISCHE PATENTSCHRIFT

(11) **EP 0 459 250 B1**
(45) Veröffentlichungstag und Bekanntmachung des Hinweises auf die Patenterteilung: **31.08.1994**
(21) Anmeldenummer: 91108020.8
(22) Anmeldetag: 17.05.1991
(51) Int. Cl.: H02G 15/072, H02G 15/068

(54) **Kabelendgarnitur**
Cable end fitting
Garniture d'extrémité de câble

(30) Priorität: 26.05.1990 DE 4017037
(43) Veröffentlichungstag der Anmeldung: 04.12.1991
(73) Patentinhaber: KARL PFISTERER ELEKTROTECHNISCHE SPEZIALARTIKEL GMBH & CO. KG, 70324 Stuttgart (DE)
(72) Erfinder: Bäuerle, Gottfried, Dipl.-Ing., W-7012 Fellbach-Schmieden (DE); Sander, Dieter, Dipl.-Ing., W-7000 Stuttgart-75 (DE); Bachmeier, Albert, Dipl.-Ing., W-7067 Plüderhausen (DE)
(74) Vertreter: Patentanwälte Bartels und Partner

(56) Entgegenhaltungen:
- EP-A- 0 017 953
- DE-A- 3 611 463

## Beschreibung

Die Erfindung betrifft eine Kabelendgarnitur mit einem auf das Kabelende aufschiebbaren Isolierkörper, der zwei gegeneinander elektrisch isolierte Elektroden trägt, von denen die erste auf Erdpotential liegt und die zweite als Feldsteuerelektrode ausgebildet ist, von der eine Spannung abnehmbar ist.

Bei einer bekannten Kabelendgarnitur dieser Art (DE 29 28 727 C2) ist die die Spannung liefernde Elektrode durch eine Ringzone der auf Erdpotential liegenden Feldsteuerelektrode gebildet und von letzterer elektrisch durch je eine Ringnut, die in einen die beiden Elektroden tragenden, elektrisch isolierenden Deflektorkörper eindringen, getrennt. Diese Ringzone muß relativ schmal sein, um die Feldsteuerung nicht zu verschlechtern. Deshalb ist die an der Ringzone abnehmbare Spannung nicht sehr groß.

Bei einer anderen bekannten Kabelendgarnitur der eingangs genannten Art in Form eines Kabelsteckers (DE 36 11 463 A1) vermag zwar die zweite Elektrode in erwünschter Weise ein relativ starkes Signal zu liefern. Da hierbei die erste Elektrode nur auf der Mantelfläche des Isolierkörpers angeordnet ist, ist es bei hohen Spannungen schwierig, eine zufriedenstellende Feldsteuerung zu erreichen. In vielen Fällen wird deshalb nach wie vor davon abgesehen, ein und dieselbe Elektrode sowohl zur Feldsteuerung als auch zur Erzeugung eines Spannungssignales zu verwenden. Da dann aber die der Signalerzeugung dienende Elektrode außerhalb des Bereiches angeordnet sein muß, in dem die Feldsteuerung erfolgt, lassen sich mit ihr nur relativ schwache Signale erzeugen, was in der Regel zusätzliche Maßnahmen erforderlich macht, um Störeinflüsse auszuschalten.

Der Erfindung liegt daher die Aufgabe zugrunde, eine Kabelendgarnitur der eingangs genannten Art zu schaffen, bei der nicht nur eine allen Anforderungen gerecht werdende Feldsteuerung gewährleistet ist, sondern auch die Lieferung eines starken und damit störunanfälligen Spannungssignals. Diese Aufgabe löst eine Kabelendgarnitur mit den Merkmalen des Anspruches 1.

Eine bevorzugte Ausführungsform der ersten Elektrode hat eine Ausbildung gemäß Anspruch 2. Besonders günstige Verhältnisse geben sich mit einer derartigen Elektrode dann, wenn die zweite Elektrode gemäß Anspruch 3 ausgebildet und die erste Elektrode gemäß Anspruch 4 angeordnet ist.

Bei einer Ausbildung des Isolierkörpers gemäß Anspruch 5 kann die erste Elektrode durch eine Kontaktierung der Schirmdrähte des Kabels auf Erdpotential gelegt werden. Eine Anpassung der Größe des Spannungssignales, das von der zweiten Elektrode abgegriffen werden kann, läßt sich dadurch erreichen, daß man einen den das Feld steuernden Abschnitt der zweiten Elektrode im Abstand konzentrisch umgebenden, zylindrischen Abschnitt gemäß Anspruch 6 vorsieht, dessen axiale Erstreckung die Größe des Spannungssignals beeinflußt. Da dieser zylindrische Abschnitt durch eine auf den Isolierkörper aufgebrachte Leitschicht gebildet sein kann, braucht nur die axiale Länge dieses zylindrischen Abschnittes auf die gewünschte Höhe des Spannungssignals abgestimmt zu werden.

Bei einer bevorzugten Ausführungsform ist eine auf den Isolierkörper aufschiebbare Hülse aus elektrisch isolierendem Material vorgesehen, die gemäß Anspruch 8 nicht nur ein Kontaktelement, sondern auch ein Dichtungselement trägt, das elektrisch dicht sowohl am Isolierkörper als auch an dieser Hülse anliegt und dadurch die Realisierung einer Doppelisolation ermöglicht. Ferner ist es vorteilhaft, wenn die Hülse eine Ringdichtung gemäß Anspruch 9 aufweist, weil dann äußere Einflüsse, insbesondere Feuchtigkeit, nicht zu der Kontaktstelle der zweiten Elektrode vordringen können. Vorzugsweise ist diese Ringdichtung einstückig mit dem Dichtungselement ausgebildet.

Im folgenden ist die Erfindung anhand eines in der Zeichnung dargestellten Ausführungsbeispiels im einzelnen erläutert. Es zeigen:
- Fig. 1: einen Längsschnitt einer Kabelendgarnitur in Form eines auf einem Kabelende angeordneten Kabelsteckers,
- Fig. 2: einen vergrößert dargestellten Längsschnitt des Isolierkörpers des Kabelsteckers.

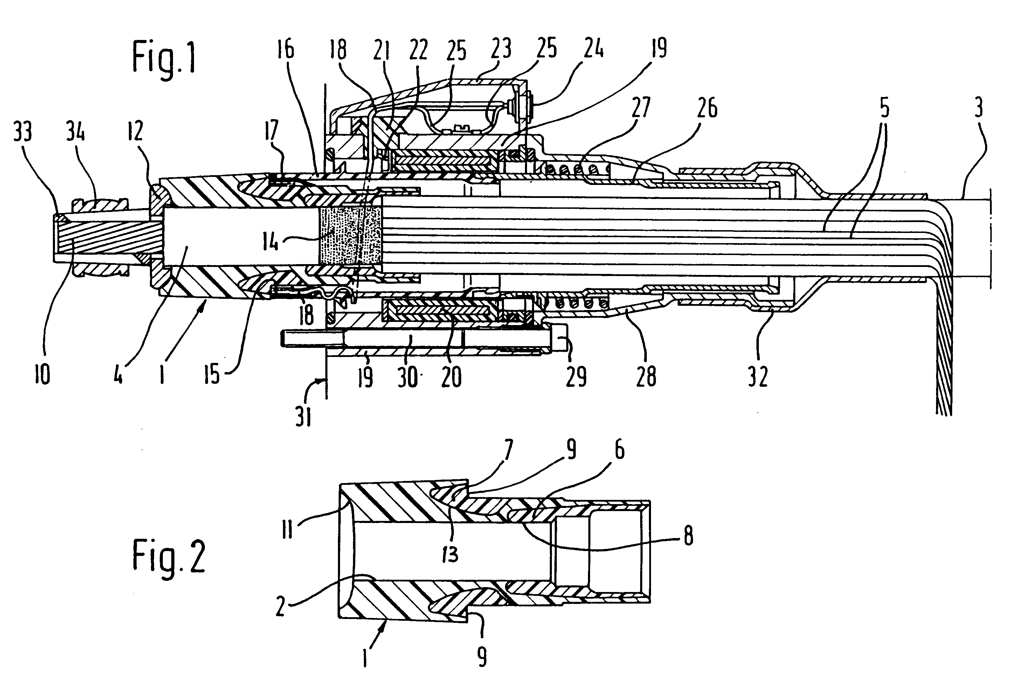

Ein Kabelstecker für Mittelspannungskabel mit Kunststoffisolation weist einen aus Silikonkautschuk bestehenden Isolierkörper 1 auf, welcher von einem zentral angeordneten, zylindrischen Kanal 2 durchdrungen wird, eine den Isolierkörper 1 in der Art einer Hülse auf den von seinem Mantel befreiten Endabschnitt des Kabels 3 aufschieben zu können. Wie insbesondere Fig. 2 zeigt, weist der Kanal 2 am Anschluß an einen ersten Abschnitt, dessen Durchmesser etwas geringer ist als der Außendurchmesser der Kunststoffisolation 4 des Kabels 3, einen zweiten Abschnitt auf, dessen Durchmesser größer ist als Außendurchmesser der Kunststoffisolation 4. An diesen zweiten Abschnitt schließt sich ein dritter Abschnitt an, dessen Durchmesser so gewählt ist, daß er, wie Fig. 1 zeigt, auf den Endabschnitt des Kabelmantels geschoben werden kann, über den hinweg die zurückgebogenen Schirmdrähte 5 des Kabels 3 aus dem Kabelstecker herausgeführt sind.

In den Isolierkörper 1 sind ein erster Formkörper 6 sowie ein zweiter Formkörper 7 eingebettet, die ebenso wie der Isolierkörper 1 aus Silikonkautschuk bestehen. Wie insbesondere Fig. 2 erkennen läßt, begrenzt der erste Formkörper 6 den Kanal 2 im Bereich seines dritten und zweiten Abschnittes sowie der sich an letzteren anschließenden Endzone des ersten Abschnittes. Seine äußere Mantelfläche ist im Bereich des dritten Abschnittes des Kanales 2 zylindrisch ausgebildet mit einem Durchmesser, der kleiner ist als der Außendurchmesser des Isolierkörpers 1 in diesem Bereich. Von dieser Endzone aus verjüngt sich die Mantelfläche des ersten Formkörpers 6 etwas gegen das andere Ende hin, das abgerundet ist, also einen Wulst mit halbkreisartigem Querschnitt bildet. Zwischen dem ersten Formkörper 6 und dem Isolierkörper 1 ist eine elektrisch leitende Schicht vorhanden, die auch die Innenmantelfläche des ersten Formkörpers 6 bedeckt und eine erste Elektrode 8 bildet.

Der über den Mantel des Kabels 3 schiebbare Endabschnitt des Isolierkörpers 1 hat eine zylindrische Außenmantelfläche, wobei die Wandstärke des Isolierkörpers 1 hier relativ gering gewählt ist, um die beim Überschieben über den Kabelmantel erforderliche Aufweitung zu ermöglichen. Mit dem gleichen Außendurchmesser setzt sich diese zylindrische Fläche auch über fast den ganzen anschließenden Bereich fort, welcher den zweiten Abschnitt des Kanales 2 umgibt. Über eine Stufe geringer Höhe schließt sich dann eine zylindrische Mittelzone an, die sich über etwas weniger als die Hälfte des ersten Abschnittes des Kanales 2 erstreckt. Im Anschluß hieran folgt eine sich radial nach außen erstreckende Schulter 9, die in ihrem außen liegenden Ringbereich durch den Isolierkörper und in ihrem innen liegenden Ringbereich durch den zweiten Formkörper 7 gebildet ist und an der das im Durchmesser größere Ende eines konischen Abschnittes der Außenmantelfläche endet. Dieser konische Abschnitt erstreckt sich bis zu derjenigen Stirnseite des Isolierkörpers 1, welche im montierten Zustand des Steckers der abisolierten Seele 10 des Kabels 3 zugekehrt ist. Diese Stirnseite ist mit einer ausgerundeten, ringförmigen Vertiefung 11 versehen, in die eine abgerundete, ringförmige Druckplatte 12 eingreift, wenn der Kabelstecker montiert ist.

Der zweite Formkörper 7 hat eine Innenmantelfläche, die sich von einer Stelle geringsten Durchmessers , der etwas größer als der Durchmesser des Kanales 2 an dieser Stelle ist, gegen die Vertiefung 11 hin in der Form eines Potentialtrichters erweitert.

Gegen den ersten Formkörper 6 hin bildet die Innenmantelfläche des zweiten Formkörpers 7 von der Stelle geringsten Durchmessers aus einen trichterartigen, im Ausführungsbeispiel als Innenkonus ausgebildeter Abschnitt, der sich gegen den ersten Formkörper 6 hin erweitert und sich bis zur Außenmantelfläche des Isolierkörpers 1 erstreckt. Der Übergang von diesem Innenkonus zu dem potentialtrichterförmigen Abschnitt der Innenmantelfläche ist ausgerundet. In den Innenkonus hinein ragt der durch einen Ringwulst abgeschlossene Endabschnitt des ersten Formkörpers 6. An das im Durchmesser größere Ende des potentialtrichterförmig ausgebildeten Abschnittes der Innenmantelfläche des zweiten Formkörpers 7 schließt sich über eine Ausrundung ein erster Abschnitt der Außenmantelfläche des zweiten Formkörpers 7 an, der innerhalb des Isolierkörpers 1 in dem außen konischen Teil des Isolierkörpers 1 liegt und eine konische Fläche bildet, die sich gegen die Schulter 9 hin erweitert und in dieser radial innerhalb des äußeren Randes der Schulter 9 endet. Im übrigen wird die Außenmantelfläche des zweiten Formkörpers 7 durch die Schulter 9 und den sich innen an diese anschließenden zylindrischen Bereich gebildet, dessen Außendurchmesser gleich dem Außendurchmesser des sich anschließenden zylindrischen Bereiches der Außenmantelfläche des Isolierkörpers 1 gewählt ist. Der in den Isolierkörper 1 eingebettete Teil der Mantelfläche des zweiten Formkörpers 7, die innerhalb der Kreislinie der Schulter 9, in welcher die im Isolierkörper 1 eingebettete Außenmantelfläche des zweiten Formkörpers 7 auf die Schulter 9 trifft, liegende Ringzone der Schulter 9 sowie ein sich daran anschließender Abschnitt wählbarer Länge der zylindrischen Außenmantelfläche des zweiten Formkörpers 7 tragen eine elektrisch leitende Schicht zur Bildung einer zweiten Elektrode 13.

Der durch den potentialtrichterförmigen Abschnitt der Innenmantelfläche des zweiten Formkörpers 7 definierte Bereich der zweiten Elektrode 13 bildet zusammen mit dem teilweise den Kanal 2 begrenzenden Bereich der ersten Elektrode 8 sowie dem sich an diesen anschließenden, durch das wulstförmige Ende des ersten Formkörpers 6 gebildeten Abschnitt die Feldsteuereinrichtung. Daher sind beide Elektroden 8 und 13 dort, wo zwischen ihnen eine Lücke vorhanden ist, so geformt, daß im Bereich dieser Lücke der Feldverlauf nur wenig gestört ist. Die Feldsteuerung ist deshalb mit einem Deflektor vergleichbar, der sich von der Innenmantelfläche des Isolierkörpers 1 aus ohne Unterbrechung bis zur Stelle größten Durchmessers kontinuierlich erweitert.

Die zweite Elektrode 13 dient aber außerdem noch der Erzeugung eines elektrischen Signales, das nicht nur die Kontrolle ermöglicht, ob das Kabel 3 Spannung führt, sondern auch ein Maß für diese Spannung ist. Da die für die kapazitive Ankopplung der zweiten Elektrode 13 an die Seele 10 des Kabels 3 maßgebende Fläche relativ groß ist, kann die Elektrode 13 ein verhältnismäßig starkes Signal liefern, was im Hinblick auf Störeinflüsse von erheblicher Bedeutung ist. Ferner kann die Spannung dieses Signales in gewissen Grenzen dadurch verändert werden, daß man die in axialer Richtung gemessene Breite desjenigen Abschnittes der zweiten Elektrode 13 variiert, welcher von der zylindrischen Außenmantelfäche des zweiten Formkörpers 7 getragen wird, weil hierdurch die Ankopplung an die erste Elektrode 8 verändert werden kann.

Wie Fig. 1 zeigt, wird für die Montage des Kabelsteckers ein Endabschnitt des Kabels 3 bis auf die Seele 10 abisoliert. Hieran schließt sich ein Abschnitt an, in dem die Kunststoffisolation 4 freigelegt ist. Daran schließt sich ein in axialer Richtung schmälerer Abschnitt an, in dem die Leitschicht 14 des Kabels 3 freiliegt. Die axiale Länge des freigelegten Abschnittes der Kunststoffisolation 4 und die axiale Länge der freigelegten Leitschicht 14 sind so gewählt, daß dann, wenn der Isolierkörper 1 aufgeschoben ist, wobei er mit Vorspannung anliegt, der erste Formkörper 6 noch eine schmale Ringzone der freigelegten Kunststoffisolation 4 überdeckt, wie Fig.1 zeigt. Außerdem kontaktiert die erste Elektrode 8 in dem die Innenmantelfläche des Kanales 2 bildenden Bereich die Leitschicht 14 sowie die über die Außenmantelfläche des Kabelmantels aus dem Stecker herausgeführten Schirmdrähte 5. Da sowohl die Leitschicht 14 als auch die Schirmdrähte 5 auf Erdpotenial liegen, liegt auch die erste Elektrode 8 auf Erdpotential.

Das Potential, auf dem die zweite Elektrode 13 wegen der kapazitiven Ankopplung an die Seele 10 liegt, kann zwar einige hundert Volt betragen. Diese Abweichung vom Nullpotential beeinträchtigt die Feldsteuerung nicht.

An den eine Ringzone auf der Schulter 9 bildenden Teil der zweiten Elektrode 13 wird im montierten Zustand ein metallischer Kontaktring 15 angepreßt, der innen in das eine Ende einer Hülse 16 aus elektrisch isolierendem Material eingesetzt ist, welche den Isolierkörper 1 von dem dem Kabelende abgekehrten Ende her unter Bildung eines Ringraumes übergreift. Diese Hülse 16 trägt an dem mit dem Kontaktring 15 versehenen Ende eine aus Silikonkautschuk bestehende Dichtungshülse 17, an welcher die Außenmantelfläche des Kontaktringes 15 anliegt und die einen radial nach außen überstehenden, flanschartigen Endabschnitt hat, der eine Ringdichtung bildet zwischen der durch den Isolierkörper 1 gebildeten Ringzone der Schulter 9 und der letzterer zugekehrten Stirnfläche der Hülse 16. Diese Abdichtung ist elektrisch dicht, so daß der Kabelstecker die an eine Doppelisolation gestellten Anforderungen erfüllt. Die Dichtungshülse 17 erstreckt sich gegen das den Mantel des Kabels 3 übergreifenden Endabschnitt des Isolierkörpers 1 hin über den zweiten Formkörper 7 hinaus und liegt hier mit Vorspannung an der Außenmantelfläche des Isolierkörpers 1 an. Hierdurch sind die die Signalspannung führenden, elektrisch leitenden Teile gegen äußere Einflüsse, beispielsweise Feuchtigkeit, die längs des Kabels in den Ringraum zwischen der Hülse 16 und dem Isolierkörper 1 eindringt, geschützt.

An den Kontaktring 15 ist das eine Ende einer Signalleitung 18 angeschlossen, die, von der Dichtungshülse 17 abgedichtet, aus der Hülse 16 herausgeführt ist, und zwar im Ausführungsbeispiel zugentlastet.

Die Hülse 16 befindet sich im Inneren einer metallischen Verlängerungsbuchse 19, die eine zylindrische Form hat und in die ein im montierten Zustand des Kabel 3 konzentrisch umgebender Stromwandler 20 eingesetzt ist, der die Hülse 16 übergreift. Durch einen in eine Bohrung in der Wand der Verlängerungsbuchse 19 eingesetzten Dichtungsstopfen 21 hindurch ist sowohl die an die zweite Elektrode 13 angeschlossene Signalleitung 18 als auch eine an den Stromwandler 20 angeschlossene Signalleitung 22 seitlich aus der Verlängerungsbuchse 19 herausgeführt.

Dort, wo die Durchführung für die Signalleitungen 18 und 22 durch die Verlängerungsbuchse 19 vorgesehen ist, ist auf diese ein Anschlußgehäuse 23 aufgesetzt, in dessen Wand eine Signalsteckbuchse 24 eingesetzt ist, an welche nicht nur die beiden Signalleitungen 18 und 22, sondern auch eine Erdleitung 25 angeschlossen sind.

Die Hülse 16 ist über die Verlängerungsbuchse 19 hinaus durch eine konzentrisch zu ihr angeordnete und mit ihr verrastete Druckhülse 26 verlängert, welche wie die Hülse 16 des Kabels 3 im Abstand konzentrisch umgibt. An einem ringförmigen Vorsprung dieser Druckhülse 26 ist das eine Ende einer vorgespannten, über die Druckhülse 26 geschobenen Schraubendruckfeder 27 abgestützt, deren anderes Ende sich am metallischen Steckergehäuse 28 abstützt, dessen Verbindungsflansch unter Zwischenlage einer Dichtung an der einen Stirnfläche der Verlängerungsbuchse 19 anliegt und mit dieser mittels Schrauben 29 verschraubt ist. Im Wechsel mit den Schrauben 29 sind Schrauben 30 über den Umfang verteilt angeordnet, welche die Verlängerungsbuchse 29 durchdringen und diese unter Zwischenlage einer Ringdichtung gegen eine Wand 31 eines Gerätes oder einer anderen Garnitur spannen. Die Schraubendruckfeder 27 drückt die Druckhülse 26 und zusammen mit dieser die Hülse 16 gegen die Schulter 9, wodurch der Außenkonus des Isolierkörpers 1 mit der erforderlichen Kraft an den korrespondierenden Innenkonus der nicht dargestellten Steckbuchse angedrückt wird und außerdem der Kontaktdruck zwischen dem Kontaktring 15 und der zweiten Elektrode 13 sowie die erforderliche Belastung der durch die Dichtungshülse 17 gebildeten Ringdichtung gewährleistet sind.

Über den der Verlängerungsbuchse 19 abgekehrten Endabschnitt des Steckergehäuses 28 wird bei der Montage ein Schrumpfschlauch 32 gelegt, der auch ein Stück weit des Kabel 3 mit den auf dessen Mantel liegenden Schirmdrähten 5 umfaßt. Die Druckplatte 12 stützt sich an einer auf die Seele 10 des Kabels 3 aufgesteckten, in Längsrichtung geschlitzten Konushülse 33 ab, welche radial an die Seele 10 mittels eines Kontaktkörpers 34 angepreßt wird, der ein nicht dargestelltes Viellinienkontaktelement trägt.

## Patentansprüche

1. Kabelendgarnitur mit einem auf das Kabelende aufschiebbaren Isolierkörper (1), der zwei gegeneinander elektrisch isolierte Elektroden (6,8; 7,13) trägt, von denen die erste auf Erdpotential liegt und die zweite als Feldsteuerelektrode ausgebildet ist, von der eine Spannung abnehmbar ist, wobei die zweite Elektrode (7,13) nur einen Abschnitt des Felddeflektors bildet und die erste Elektrode (6,8) als eine den Felddeflektor vervollständigende Feldsteuerelektrode ausgebildet ist
dadurch gekennzeichnet, daß
a) die erste Elektrode (6,8) in dem sich an die zweite Elektrode (7,13) anschließenden Abschnitt eine Zone in Form einer von der zweiten Elektrode (7,13) aus gesehen konvex gekrümmten Fläche eines Ringwulstes hat und
b) der der ersten Elektrode (6,8) zugewandte Endabschnitt der zweiten Elektrode (7,13) eine einem sich gegen die erste Elektrode (6,8) hin öffnenden Konus zumindest ähnliche Fläche definiert.

2. Garnitur nach Anspruch 1, dadurch gekennzeichnet, daß die konvex gekrümmte Fläche der ersten Elektrode (6,8) eine Verbindungszone bildet zwischen einer eine freiliegende innere Mantelfläche bildenden ersten Ringzone und einer diese im Abstand konzentrisch umgebenden zweiten Ringzone.

3. Garnitur nach Anspruch 1 oder 2, dadurch gekennzeichnet, daß die vom Endabschnitt der zweiten Elektrode (7,13) definierte Fläche sich bis zur Außenmantelfläche des Isolierkörpers (1) erstreckt.

4. Garnitur nach Anspruch 3, dadurch gekennzeichnet, daß die erste Elektrode (8) in den von der zweiten Elektrode (13) gebildeten Innenkonus eingreift.

5. Garnitur nach einem der Ansprüche 2 bis 4, dadurch gekennzeichnet, daß der Isolierkörper (1) einen auf den Endabschnitt des Kabelmantels, an dem außen Schirmdrähte (5) anliegen, aufschiebbaren Endabschnitt aufweist und daß die erste Elektrode (8) in diesen Endabschnitt hinein verlängert ist.

6. Garnitur nach einem der Ansprüche 1 bis 5, dadurch gekennzeichnet, daß die zweite Elektrode (13) radial außerhalb des das elektrische Feld steuernden Abschnittes einen diesen im Abstand konzentrisch umgebenden, zylindrischen Abschnitt aufweist, der nach außen hin freiliegt, und daß die Erstreckung dieses zylindrischen Abschnittes über das der ersten Elektrode (8) zugewandte Ende eines die Form der zweiten Elektrode (13) bestimmenden Formkörpers (7) hinaus entsprechend der gewünschten Größe des von der zweiten Elektrode (13) abnehmbaren Spannungssignals gewählt ist.

7. Garnitur nach einem der Ansprüche 1 bis 6, dadurch gekennzeichnet, daß die beiden Elektroden (8,13) durch elektrisch leitende Schichten auf der Oberfläche von zwei Formkörpern (6,7) aus elektrisch isolierendem Material, vorzugsweise Silikonkautschuk, gebildet sind, die zumindest teilweise in den vorzugsweise aus Silikonkautschuk bestehenden Isolierkörper (1) eingebettet sind.

8. Garnitur nach einem der Ansprüche 1 bis 7, gekennzeichnet durch eine über den Isolierkörper (1) von dessen vom Kabelende wegweisenden Ende her über einen Teil seiner Länge schiebbare Hülse (16) aus elektrisch isolierendem Material, deren die zweite Elektrode (13) teilweise übergreifender Endabschnitt einen innen liegenden Kontaktring (15) für die Kontaktierung der zweiten Elektrode (13) sowie ein in sich geschlossenes Dichtungselement (17) trägt, das elektrisch dicht an der Schulter (9) des Isolierkörpers (1) radial außerhalb der zweiten Elektrode (13) anliegt.

9. Garnitur nach einem der Ansprüche 1 bis 8, gekennzeichnet durch eine sowohl an der Innenwand der Hülse (16) als auch an der Außenmantelfläche des Isolierkörpers (1) anliegende Ringdichtung.

10. Garnitur nach Anspruch 9, dadurch gekennzeichnet, daß die Ringdichtung durch eine Dichtungshülse (17) gebildet ist, die mit einem an ihrem einen Endabschnitt vorgesehenen Flansch das Dichtungselement bildet sowie mit ihrem anderen, im Außendurchmesser kleineren Endabschnitt an der Außenmantelfläche des Isolierkörpers (1) dicht anliegt.

11. Garnitur nach Anspruch 10, dadurch gekennzeichnet, daß die axiale Länge der Dichtungshülse (17) so gewählt ist, daß ihr im Durchmesser kleinerer Endabschnitt neben einer einen Teil der zweiten Elektrode (13) bildenden Leitschicht anliegt.

## Claims

1. Cable end fitting having an insulating member (1) which can be pushed onto the cable end and which carries two electrodes (6, 8; 7, 13) which are electrically insulated with respect to one another and of which the first is connected to earth potential and the second is in the form of a field control electrode from which a voltage can be derived, the second electrode (7, 13) forming only a portion of the field deflector and the first electrode (6, 8) being in the form of a field control electrode completing the field deflector, characterised in that:
a) the first electrode (6, 8) in the portion adjoining the second electrode (7, 13) has an area in the form of a convex surface of an annular bead viewed from the second electrode (7, 13); and
b) the end portion of the second electrode (7, 13) facing the first electrode (6, 8) defines a surface which is at least similar to a cone which is open towards the first electrode (6, 8).

2. Fitting according to Claim 1, characterised in that the convex surface of the first electrode (6, 8) forms a connection area between a first annular area forming an exposed inner generated surface and a second annular area concentrically surrounding the first annular area at a distance.

3. Fitting according to either of Claims 1 and 2, characterised in that the surface defined by the end portion of the second electrode (7, 13) extends to the outer generated surface of the insulating member (1).

4. Fitting according to Claim 3, characterised in that the first electrode (8) engages the internal cone formed by the second electrode (13).

5. Fitting according to any one of Claims 2 to 4, characterised in that the insulating member (1) comprises an end portion which can be pushed onto the end portion of the cable sheath against which screening wires (5) abut externally; and in that the first electrode (8) is extended into this end portion.

6. Fitting according to any one of Claims 1 to 5, characterised in that the second electrode (13) comprises, radially and externally of the portion controlling the electrical field, a cylindrical portion which concentrically surrounds this first portion at a distance and which is exposed towards the exterior; and in that the extension of this cylindrical portion beyond the end, facing the first electrode (8), of a moulded member (7) determining the shape of the second electrode (13) is selected such that it corresponds to the desired size of the voltage signal which can be derived from the second electrode (13).

7. Fitting according to any one of Claims 1 to 6, characterised in that the two electrodes (8, 13) are formed by electrically conductive layers on the surface of two moulded members (6, 7) of electrically insulating material, preferably silicone rubber, which are embedded at least partially in the insulating member (1) consisting preferably of silicone rubber.

8. Fitting according to any one of Claims 1 to 7, characterised by a sleeve (16) of electrically insulating material which can be pushed over the insulating member (1) from its end facing away from the cable end over part of its length and of which the end portion partially engaging over the second electrode (13) carries an internal contact ring (15) for contacting the second electrode (13) and a self-contained sealing element (17) which abuts the shoulder (9) of the insulating member (1) radially externally of the second electrode (13) in an electrically leaktight manner.

9. Fitting according to any one of Claims 1 to 8, characterised by an annular seal which abuts both the inner wall of the sleeve (16) and the outer generated surface of the insulating member (1).

10. Fitting according to Claim 9, characterised in that the annular seal is formed by a sealing sleeve (17) which, with a flange provided at its end portion, forms the sealing element and, with its other end portion which has a smaller outer diameter, closely abuts the outer generated surface of the insulating member (1).

11. Fitting according to Claim 10, characterised in that the axial length of the sealing sleeve (17) is selected such that its end portion which has a smaller diameter abuts adjacent a conductive layer forming part of the second electrode (13).

## Revendications

1. Garniture d'extrémité de câble comportant un corps isolant (1) pouvant être engagé sur l'extrémité du câble et portant deux électrodes (6, 8; 7,13), isolées électriquement l'une de l'autre et dont la première est soumise au potentiel de terre tandis que la seconde est agencée comme une électrode de commande de champ, à laquelle une tension peut être prise, la seconde électrode (7, 13) constituant seulement une partie du déflecteur de champ et la première électrode (6, 8) étant agencée comme une électrode de commande de champ complètant le déflecteur de champ, caractérisée en ce que :
a) la première électrode (6, 8) comporte, dans la partie située à la suite de la seconde électrode (7, 13), une zone ayant, en l'observant à partir de la seconde électrode (7, 13), la forme d'une surface de courbure convexe d'un bourrelet annulaire et
b) la partie extrême, dirigée vers la première électrode (6, 8), de la seconde électrode (7, 13),définit une surface au moins analogue à un cône s'ouvrant en direction de la première électrode (6, 8).

2. Garniture selon la revendication 1, caractérisée en ce que la surface de courbure convexe de la première électrode (6, 8) forme une zone de liaison entre une première zone annulaire, constituant une surface périphérique intérieure dégagée, et une seconde zone annulaire entourant celle-ci concentriquement et à distance.

3. Garniture selon la revendication 1 ou 2, caractérisée en ce que la surface définie par la partie extrême de la seconde électrode (7, 13) s'étend jusqu'à la surface périphérique extérieure du corps isolant (1).

4. Garniture selon la revendication 3, caractérisée en ce que la première électrode (8) est engagée dans le cône intérieur formé par la seconde électrode (13).

5. Garniture selon une des revendications 2 à 4, caractérisée en ce que le corps isolant (1) comporte une partie extrême, pouvant être engagée sur la partie extrême de la gaine de câble, contre laquelle s'appuient extérieurement les fils de blindage (5) et en ce que la première électrode (8) est prolongée dans cette partie extrême.

6. Garniture selon une des revendications 1 à 5, caractérisée en ce que la seconde électrode (13) comporte, radialement à l'extérieur de la partie commandant le champ électrique, une partie cylindrique entourant cette partie concentriquement et à distance, dégagée vers l'extérieur et en ce que l'étendue de cette partie cylindrique sur l'extrémité, dirigée vers la première électrode (8), d'un élément profilé (7) déterminant la forme de la seconde électrode (13), est choisie en correspondance à la grandeur désirée du signal de tension pouvant être pris à la seconde électrode (13).

7. Garniture selon une des revendications 1 à 6, caractérisée en ce que les deux électrodes (8, 13) sont constituées par des couches électriquement conductrices situées sur la surface de deux éléments profilés (6, 7) formés d'un matériau électriquement isolant, de préférence un caoutchouc de silicone, et qui sont noyées au moins en partie dans le corps isolant (1), constitué avantageusement de caoutchouc de silicone.

8. Garniture selon une des revendications 1 à 7, caractérisée par un manchon (16) formé d'un matériau électriquement isolant, engagé sur une partie de sa longueur sur le corps isolant (1) à partir de son extrémité orientée en éloignement de l'extrémité de câble et dont la partie extrême, s'accrochant en partie sur la seconde électrode (13), porte une bague de contact (15), située à l'intérieur pour l'établissement de contact avec la seconde électrode (13) ainsi qu'un élément d'étanchéité (17) intrinsèquement fermé et qui est appliqué de façon électriquement isolante contre l'épaulement (9) du corps isolant (1) radialement à l'extérieur de la seconde électrode (13).

9. Garniture selon une des revendications 1 à 8, caractérisée par un joint annulaire d'étanchéité s'appliquant aussi bien contre la paroi intérieure du manchon (16) que contre la surface périphérique extérieure du corps isolant (1).

10. Garniture selon la revendication 9, caractérisée en ce que le joint annulaire d'étanchéité est constitué par un manchon d'étanchéité (17) qui constitue par une collerette prévue à une de ses parties extrêmes l'élément d'étanchéité et qui s'applique de façon étanche par son autre partie extrême, d'un diamètre extérieur plus petit, contre la surface périphérique extérieure du corps isolant (1).

11. Garniture selon la revendication 10, caractérisée en ce que la longueur axiale du manchon d'étanchéité (17) est choisie de telle sorte que sa partie extrême de petit diamètre s'applique à côté d'une couche conductrice formant une partie de la seconde électrode (13).
